# EUROPEAN PATENT SPECIFICATION

(11) **EP 2 019 393 B1**
(45) Date of publication and mention of the grant of the patent: **19.08.2015**
(21) Application number: 08161155.0
(22) Date of filing: 25.07.2008
(51) Int. Cl.: G21C 15/18

(54) **Boiling water reactor with an emergency core cooling system**
Siedewasserreaktor mit einem Notkühlsystem
Réacteur nucléaire à eau bouillante avec système de refroidissement d'urgence du coeur

(30) Priority: 26.07.2007 JP 2007194220
(43) Date of publication of application: 28.01.2009
(73) Proprietor: Kabushiki Kaisha Toshiba, Minato-ku Tokyo 105-8001 (JP)
(72) Inventor: Yamazaki, Hiroshi, TOKYO 105-8001 (JP); Suzuki, Yuka, TOKYO 105-8001 (JP); Shimizu, Takeo, TOKYO 105-8001 (JP)
(74) Representative: Särner, Gustaf Johannes

(56) References cited:
- JP-A- 2 027 295
- JP-A- 4 216 494
- JP-A- 6 201 883
- JP-A- 8 313 686
- JP-A- 10 160 884
- JP-A- 2003 167 088
- JP-A- 2004 061 192
- JP-A- 2006 138 680
- US-A- 5 426 681
- DATABASE WPI Week 198606 Thomson Scientific, London, GB; AN 1986-039799 XP002504620 & JP 60 260888 A (TOSHIBA KK) 24 December 1985 (1985-12-24)

## Description

### BACKGROUND OF THE INVENTION

### Field of the Invention

The present invention relates to an boiling water reactor provided with emergency core cooling system in which a water injection system is allowed to have multiplicity for injecting nuclear reactor coolant into a reactor pressure vessel.

### Description of the Related Art

When determining the design validity from a viewpoint of safety ensuring nuclear reactor facilities as a nuclear power plant, a loss of coolant accident at the nuclear reactor will be assumed.

The loss of coolant accident at the nuclear reactor is assumed to be an event in which the nuclear reactor coolant is drained to reduce the cooling capacity of the nuclear reactor core, during the generating power operation of the nuclear reactor, due to a fracture of piping or an instrument appendant thereto and constituting a pressure boundary of the nuclear reactor coolant.

The pressure boundary of the nuclear reactor coolant herein means a facility range that internally capsules the nuclear reactor coolant during normal operation of the nuclear reactor so as to have the same pressure condition as that of the nuclear reactor while forming a pressure barrier at an abnormal state, so that if this facility range is damaged, the loss of coolant accident occurs at the nuclear reactor.

Specifically, the facility range includes a reactor pressure vessel, structures attached to the reactor pressure vessel such as a control rod drive mechanism housing, instruments and piping constituting a reactor coolant system (a reactor coolant circulation system, a main steam system, and a water supply system), and piping for connecting these systems together.

The safety ensuring the nuclear reactor against the loss of coolant accident at the nuclear reactor assumed in design is to safely stop the nuclear reactor and to prevent the nuclear reactor from being damaged by injecting the reactor coolant into the reactor pressure vessel for cooling a nuclear reactor fuel and confining a radioactive material therein.

An emergency core cooling system provided in the nuclear reactor facilities is for cooling the nuclear reactor fuel at the loss of coolant accident at the nuclear reactor, which is one of design basis accidents, so as to maintain the soundness of fuel coverage and to remove the decay heat generated in the reactor core while maintaining the coolable shape of the reactor core capable of quantitatively or semi-quantitatively estimating the heat removal from the nuclear reactor fuel. The design principle of the emergency core cooling system is to ensure safety functions for instruments (dynamic instruments) actively achieving predetermined functions with an external input even in a state when applying a single failure basis thereto and to provide a plurality of emergency diesel power generating units assuming losses of internal and external power supplies, so that it is necessary to allow the function and system to have redundancy and independency. The single failure herein means the loss of predetermined safety functions of one instrument by a single reason including a multiple failure due to a dependence factor. The single failure basis herein is to design an instrument not to impair safety functions of the system having the instrument even when assuming the single failure of the instrument.

A reactor core cooling function for cooling the nuclear reactor fuel at the loss of coolant accident is to inject water into the reactor pressure vessel for cooling the nuclear reactor core by being automatically started upon the loss of coolant accident. For example, in an advanced boiling water reactor (ABWR), the emergency core cooling system includes a high-pressure reactor core injection system capable of injecting the nuclear reactor coolant even under high pressure in the reactor pressure vessel, a low-pressure reactor core injection system for injecting the nuclear reactor coolant under low pressure in the nuclear reactor, and an automatically pressure reducing system for automatically reducing the pressure in the reactor pressure vessel, for achieving the rector core cooling function.

The automatically pressure reducing function achieved by the automatically pressure reducing system herein is to prompt the injecting the nuclear reactor coolant with the emergency core cooling system by discharging the steam within the reactor pressure vessel so as to forcedly reduce the pressure in the reactor pressure vessel.

For example, if a large-diameter pipe connected to the reactor pressure vessel is fractured, the nuclear reactor coolant is rapidly discharged from the reactor pressure vessel to promptly reduce the pressure in the reactor pressure vessel, so that the low-pressure injection system is operated and a large amount of the nuclear reactor coolant is injected into the reactor pressure vessel.

On the other hand, if a small-diameter pipe connected to the reactor pressure vessel is fractured, the nuclear reactor coolant in the reactor pressure vessel is discharged. However, the pressure in the reactor pressure vessel is not rapidly reduced, so that the high-pressure injection system is first operated so as to maintain the water level in the reactor pressure vessel and to reduce the pressure in the reactor pressure vessel by injecting the nuclear reactor coolant until the pressure at which the low-pressure injection system can inject the nuclear reactor coolant.

Furthermore, in preparation for the failure of the high-pressure reactor core injection system, the automatically pressure reducing system discharges the steam in the reactor pressure vessel for prompting the low-pressure injection system to inject the nuclear reactor coolant by forcedly reducing the pressure in the reactor pressure vessel.

In order to remove decay heat of the nuclear reactor core along a long period, the nuclear reactor coolant injected for submerging the reactor core after the loss of the coolant accident is heated by the decay heat of the nuclear reactor core to turn into steam or high-temperature water, and then, is discharged out of the reactor pressure vessel via a fractured hole and transferred to a pressure suppressing chamber in a nuclear reactor containment vessel so as to be discharged to a final heat sink (sea) by a containment vessel spray cooling system.

The advanced boiling water reactor (ABWR) employs an internal pump recirculation system of the nuclear reactor coolant. Accordingly, since the reactor pressure vessel has no large diameter piping at the lower level than the upper end of the nuclear reactor core contained in the reactor pressure vessel, the pipes assumed to be fracture in design of the emergency core cooling system are small/medium diameter pipes or steam piping located at the upper level than the nuclear reactor core.

Hence, in a conventional advanced boiling water reactor (ABWR), the high-pressure system (the high-pressure reactor core injection system and a cooling system during isolating the nuclear reactor) for injecting the nuclear reactor coolant when the pressure in the reactor pressure vessel is high has been reinforced, improving the reliability against the loss of the nuclear reactor coolant accident.

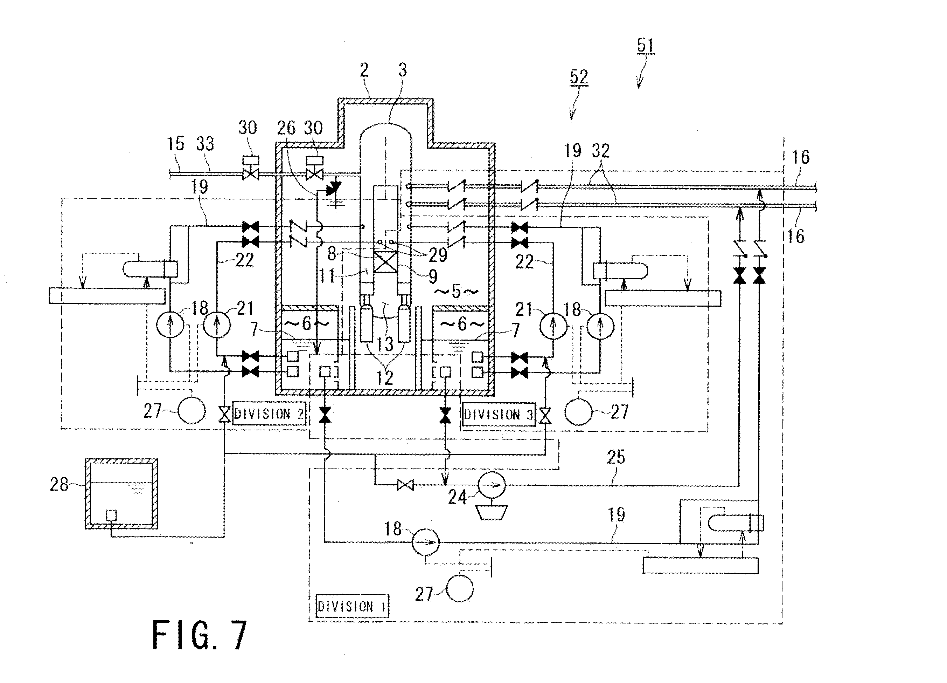

Fig. 7 is a schematic diagram of an emergency core cooling system in a conventional advanced boiling water reactor.

As shown in Fig. 7, in a conventional advanced boiling water reactor 51, a reactor pressure vessel 3 is contained within a reactor containment vessel (PCV) 2. The reactor pressure vessel 3 is erected from a support pedestal (not shown).

The reactor containment vessel 2 internally has the support pedestal while including a cylindrical dry well 5 surrounding the reactor pressure vessel 3 and a cylindrical pressure suppressing chamber 6 disposed in the circumference of the support pedestal. On the bottom of the pressure suppressing chamber 6, a pressure suppressing pool 7 is provided for storing nuclear reactor coolant.

Inside the reactor pressure vessel 3, a nuclear reactor core 8 is accommodated, and the nuclear reactor core 8 is covered with a reactor core shroud 9. Between the reactor pressure vessel 3 and the reactor core shroud 9, an annular or sleeve down-comer portion 11 is formed. Below the down-comer portion 11, a coolant recirculation pump 12 is provided.

Below the nuclear reactor core 8, a reactor core lower plenum 13 is formed, and core water (the nuclear reactor coolant) lowered through the down-comer portion 11 by the coolant recirculation pump 12 is led to the reactor core lower plenum 13. The core water led to the reactor core lower plenum 13 is inverted and guided to the nuclear reactor core 8 so as to absorb the heat generated by a fission reaction during passing through the nuclear reactor core 8, and then, it becomes a gas-liquid flow so as to be led to a reactor core upper plenum (not shown).

This gas-liquid flow is subsequently led to a steam separator (not shown) for being gas/liquid separated. The separated liquid is dropped down in the reactor pressure vessel 3 and guided to the down-comer portion 11.

On the other hand, the steam separated in the steam separator is dried through a steam dryer (not shown) to become dried super-heated steam. The super-heated steam is led to a steam turbine

(not shown) through a main steam system 15 so as to rotate the steam turbine for generating electric power by driving a generator (not shown). The main steam system 15 has two lines, but one line is omitted in Fig. 7.

The steam worked in the steam turbine is cooled in a condenser (not shown) so as to become condensate. The condensate subsequently passes through a nuclear reactor condensate / feedwater system 16 so as to be returned to the reactor pressure vessel 3 therefrom, and then, it is mixed with the core water (the nuclear reactor coolant) contained in the reactor pressure vessel 3.

On the other hand, in the conventional advanced boiling water reactor 51, the nuclear reactor core 8 is provided within the reactor pressure vessel 3. In the nuclear reactor core 8, fuel rods (not shown) are charged.

A conventional emergency core cooling system 52 includes: a three-line and low-pressure water injection system 19, each line having a low-pressure injection system motor-driven pump 18; a two-line and high-pressure reactor core water injection system 22, each line having a high-pressure reactor core injection system motor-driven pump 21; an one-line cooling system during isolating the nuclear reactor 25 having a cooling system during isolating the nuclear reactor turbine-driven pump 24; and an automatic pressure reduction system 26.

An emergency core cooling system 50 receives electric power from a three-line emergency diesel generator 27 as an emergency power supply for achieving the safety function of this system even if an external power supply cannot be used in addition to the assumption of a single failure of an instrument constituting the emergency core cooling system 50.

The low-pressure water injection system 19 uses a low-pressure water injection mode, which is one of operation modes of a residual-heat removing system (not shown). The low-pressure water injection system 19, having independent three lines, also absorbs the pool water (the nuclear reactor coolant) in the pressure suppression pool 7 from the pressure suppression chamber 6 so as to inject the pool water outside the reactor core shroud 9 of the reactor pressure vessel 3.

The low-pressure water injection system 19 is automatically started by a low-signal of the nuclear reactor water level (level 1) or a high-pressure signal of the dry well 5 of the nuclear reactor containment vessel 2, so that when the pressure in the reactor pressure vessel 3 is reduced, the pool water (the nuclear reactor coolant) can be injected into the reactor pressure vessel 3 from the pressure suppressing chamber 6.

The high-pressure reactor core water injection system 22, having independent two lines, absorbs the pool water (the nuclear reactor coolant) from a condensate storage tank 28 as a first water source at an early stage and finally from the pressure suppression chamber 6 as a second water source so as to inject the pool water inside the reactor core shroud 9 of the reactor pressure vessel 3.

The high-pressure reactor core water injection system 22 is automatically started by a low-signal of the nuclear reactor water level (level 1.5) or a high-pressure signal of the dry well 5 of the nuclear reactor containment vessel 2, and it is automatically stopped by a high-signal of the nuclear reactor water level (level 8). The pool water is injected onto a fuel assembly through sparger nozzles 29 provided above the nuclear reactor core 8 so as to cool the nuclear reactor core 8. At a loss of water feed event, the high-pressure reactor core water injection system 22 is operated for a backup of the cooling system during isolating the nuclear reactor 25 (start water level 2) before the starting of the low-pressure water injection system 19 (start water level 1).

In a conventional boiling water nuclear reactor, the cooling system during isolating the nuclear reactor 25 is provided for cooling the nuclear reactor core 8 by feeding cooling water into the nuclear reactor even if the nuclear reactor is isolated by closing a main steam isolation valve 30 at a transient event or a loss of water feed event.

In an advanced boiling water reactor 40, the cooling system during isolating the nuclear reactor 25 has an emergency core cooling function for enforcing the high-pressure system. At the loss of the nuclear reactor coolant accident, the cooling system during isolating the nuclear reactor 25 injects water outside the reactor core shroud 9 of the reactor pressure vessel 3 from the condensate storage tank 28 at an early stage and finally from the pressure suppression chamber 6 via feed piping 32 of the nuclear reactor condensate/feedwater system 16. The cooling system during isolating the nuclear reactor 25 drives the pump by turbine power due to the steam in the reactor pressure vessel 3, and it is automatically started by a low-signal of the nuclear reactor water level (level 2) or a high-pressure signal of the dry well 5 of the nuclear reactor containment vessel 2, and it is automatically stopped by a high-signal of the nuclear reactor water level (level 8).

The automatic pressure reduction system 26 reduces the pressure in the reactor pressure vessel 3 by releasing the steam in the reactor pressure vessel 3 to the pressure suppression chamber 6 until a pressure at which the injection can be made by the low-pressure water injection system 19 for cooling the nuclear reactor core 8.

The automatic pressure reduction system 26 also includes some of relief safety valves provided along main steam piping 33 of the main steam system 15. The automatic pressure reduction system 26 is also operated after a predetermined period of time since both the low-signal of the nuclear reactor water level (level 1) and the high-pressure signal of the dry well 5 of the nuclear reactor containment vessel 2 are received.

The conventional emergency core cooling system 52, having a three-division configuration, includes divisions 1-3, in which the division 1 has the one-line and low-pressure water injection system 19, the one-line cooling system during isolating the nuclear reactor 25, and the one-line emergency diesel generator 27; the division 2 has the one-line and low-pressure water injection system 19, the one-line and high-pressure reactor core water injection system 22, and the one-line emergency diesel generator 27; and the division 3 has the one-line and low-pressure water injection system 19, the one-line and high-pressure reactor core water injection system 22, and the one-line emergency diesel generator 27.

The low-pressure water injection system 19 and the cooling system during isolating the nuclear reactor 25 in the division 1 feed the nuclear reactor coolant to one and another lines of the two-line nuclear reactor condensate/feedwater system 16, respectively.

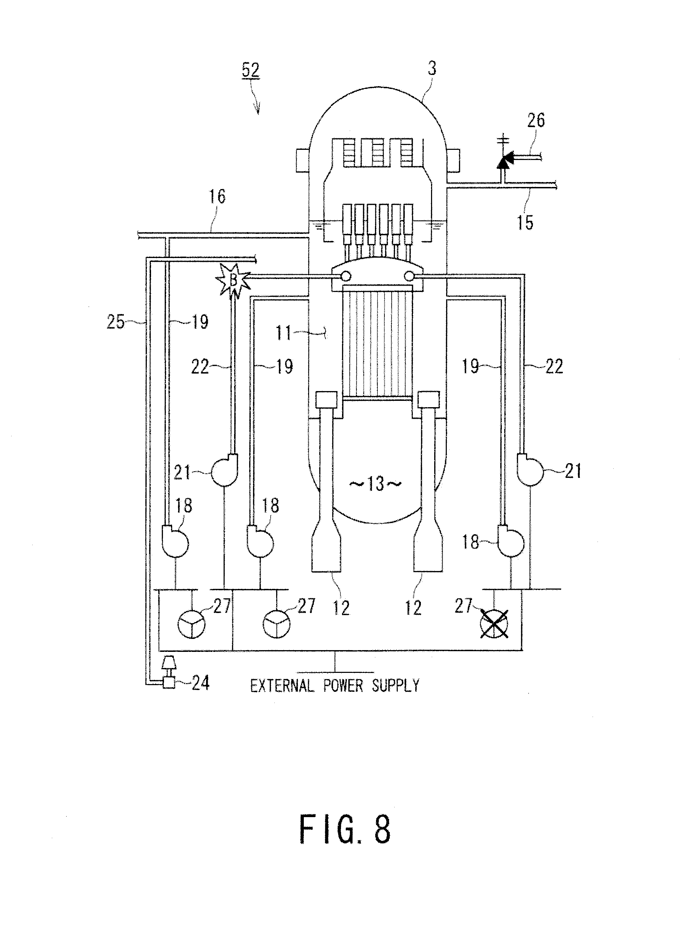

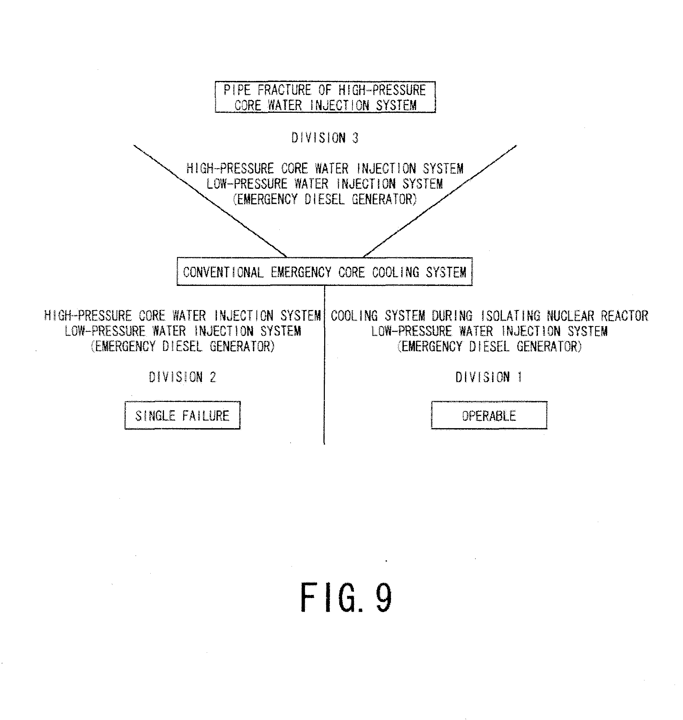

Figs. 8 and 9 are drawings for illustrating the network of the emergency core cooling system in a conventional advanced boiling water reactor.

As shown in Figs. 8 and 9, the most severe design-basis accidents of the emergency core cooling system in the advanced boiling water reactor are assumed that the internal power supply and the external power supply are lost; a single failure occurs in the emergency diesel generator 27 connected to the one-line and high-pressure reactor core water injection system 22 (symbol x in Fig. 8); and a fracture occurs in connection piping of the other one-line and high-pressure reactor core water injection system 22 (character B in Fig. 8).

The low-pressure water injection system 19 connected to the emergency diesel generator 27 cannot be also used due to the single failure of the emergency diesel generator 27. At this time, in the conventional emergency core cooling system 52, the cooling system during isolating the nuclear reactor pump 24 is started by a low-signal of the nuclear reactor water level (level 2) so as to alleviate the lowered nuclear reactor water level by injecting the reactor coolant into the higher-pressure reactor pressure vessel 3. Subsequently, the automatic pressure reduction system 26 is started by a low-signal of the nuclear reactor water level (level 1) and the high-pressure signal of the dry well 5 to reduce the pressure in the reactor pressure vessel 3, so that the two lines of the low-pressure water injection system 19 started by the low-signal of the nuclear reactor water level inject the nuclear reactor coolant.

Nuclear reactor containment facilities having the reactor containment vessel 2 are provided for confining the nuclear reactor coolant and a radioactive material drained from the reactor pressure vessel 3. The nuclear reactor containment facilities include primary containment facilities for directly confining the nuclear reactor coolant and the radioactive material and secondary containment facilities for removing the radioactive material before the nuclear reactor coolant and the radioactive material are discharged outside the system.

The primary containment facilities include the reactor containment vessel 2 for holding the radioactive material for a long period of time so as to attenuate radioactivity and a nuclear reactor containment vessel auxiliary system. The reactor containment vessel auxiliary system includes a containment vessel spray cooling system and a combustible gas concentration control system for maintaining the gas concentration in the reactor containment vessel 2 within a flammability limit by recombining hydrogen gas and oxygen gas generated by radiolysis of the core water or a metal/water reaction in the reactor core.

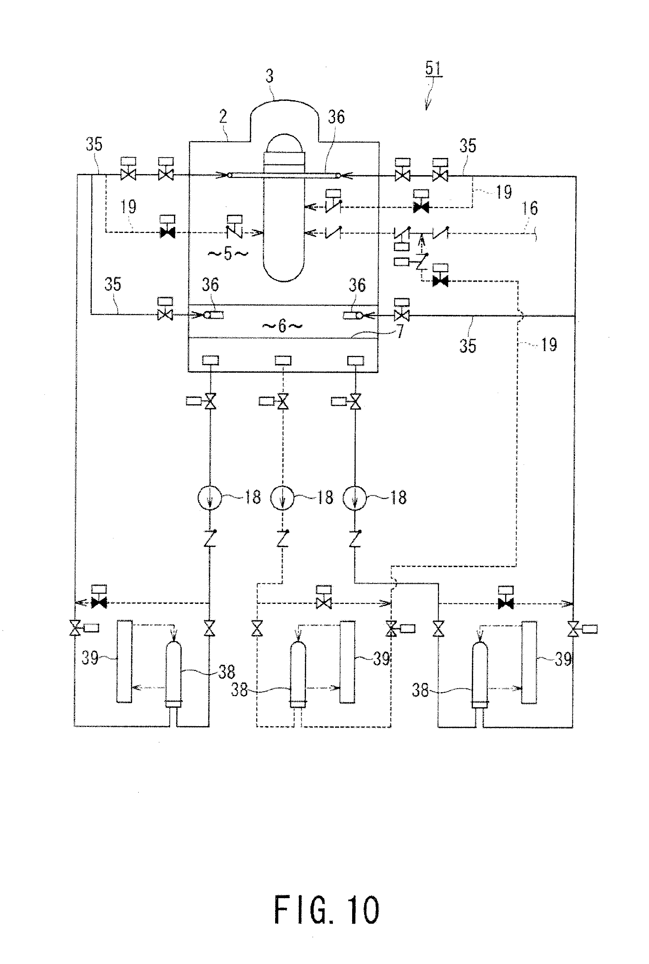

Fig. 10 is a schematic diagram of the containment vessel spray cooling system of a conventional advanced boiling water reactor.

As shown in Fig. 10, a containment vessel spray cooling system 35 uses a containment vessel spray cooling mode, which is one of operation modes of the residual-heat removing system (not shown). The containment vessel spray cooling system 35 securely discharges decay heat generated in the nuclear reactor core 8 to the final heat sink (sea) and alleviates the pressure by condensing the steam in the reactor containment vessel 2 while removing the radioactive materials floating in the ambient atmosphere by a decontamination effect of containment vessel sprays 36. At the loss of the nuclear reactor coolant accident, the residual-heat removing system is automatically started to serve as the low-pressure water injection system 19, and by switching a motor-operated valve with a remote/manual operation, the operation mode of the residual-heat removing system is switched to operate as the containment vessel spray cooling system 35.

The heat generated by the decay heat of the nuclear reactor fuel continues to be discharged to the reactor containment vessel 2 from a breakage section as an overflow stream even when the nuclear reactor core 8 is cooled with the conventional emergency core cooling system 52. The containment vessel spray cooling system 35 is provided for removing heat inside the reactor containment vessel 2 so as to maintain the soundness. It is also required to remove the decay heat inside the reactor containment vessel 2 and to decontaminate the radioactive materials floating in the ambient atmosphere along a long period of time after the loss of the coolant accident. The containment vessel spray cooling system 35 takes pool water (the nuclear reactor coolant) therein from the pressure suppression chamber 6 so as to cool the pool water through a residual heat removal system heat exchanger 20, and then, the pool water is sprayed into the dry well 5 and the pressure suppression chamber 6 via the containment vessel sprays 36; and the water sprayed into the dry well 5 is returned to the pressure suppressing chamber 6 via a vent pipe.

The decay heat removed from the reactor containment vessel 2 is discharged to the final heat sink (sea) via a heat exchanger provided in a nuclear reactor auxiliary-machinery cooling system 21.

A containment vessel spray cooling system capable of removing the decay heat in the reactor containment vessel 2 by supplying the pool water in the pressure suppression chamber 6 thereto is disclosed in Japanese Unexamined Patent Application Publication No. S60-260888 (Patent Publication 1).

The emergency core cooling system 50 of the conventional advanced boiling water reactor 51, having a three-division configuration, includes three lines of the low-pressure water injection system 19 as well as reinforces the high-pressure system by adding the two-line and high-pressure reactor core water injection system 22 and the one-line cooling system during isolating the nuclear reactor 25.

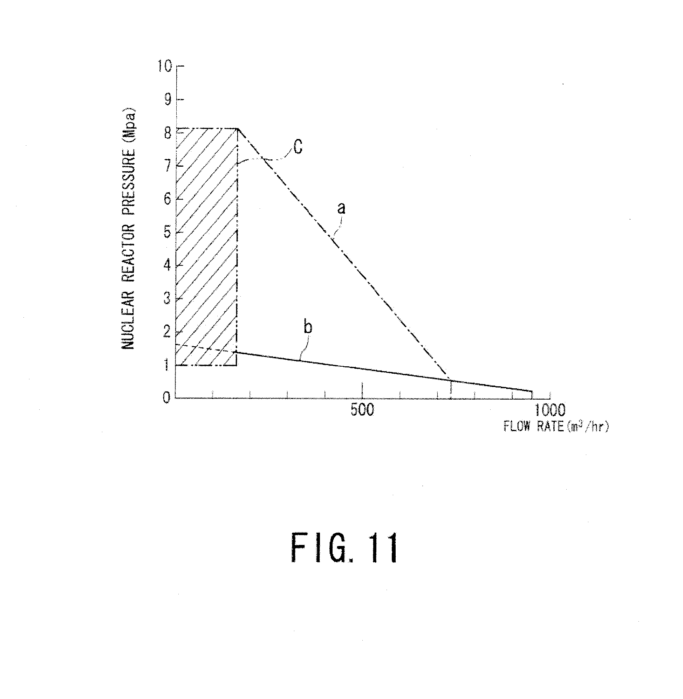

Fig. 11 is a drawing showing an example of injection characteristics of the nuclear reactor coolant (cooling water) of the emergency core cooling system in a conventional advanced boiling water reactor.

As shown in Fig. 11, in the high-pressure reactor core water injection system 22 (line segment "a"), and in the low-pressure water injection system 19 (line segment "b"), with decreasing pressure in the reactor pressure vessel 3, the injection flow rate of the nuclear reactor coolant is increased. In the cooling system during isolating the nuclear reactor 25, there are a pressure range capable of injecting the nuclear reactor coolant at a predetermined flow rate independently of the pressure in the reactor pressure vessel 3 like a hatched region "C" and a pressure range incapable of injecting when the pressure in the reactor pressure vessel 3 is decreased below a predetermined value. That is, the injection characteristics of the nuclear reactor coolant (cooling water) in the conventional emergency core cooling system 52 are that in the high-pressure reactor core water injection system 22, with decreasing pressure in the reactor pressure vessel 3, the flow rate capable of injecting the nuclear reactor coolant into the nuclear reactor core 8 accommodated in the reactor pressure vessel 3 is increased, whereas in the cooling system during isolating the nuclear reactor 25, the flow rate capable of injecting the nuclear reactor coolant is not changed due to the pressure in the reactor pressure vessel 3.

For the conventional advanced boiling water reactor 51, a case is assumed where on-line maintenance of a line having a safety function is executed during ordinary operation of a nuclear power generating plant. For example, during on-line maintenance of one line of the emergency diesel generator 27, if a single failure of another line of the emergency diesel generator 27 occurs, the total two lines of the emergency diesel generator 27 cannot be used, so that the emergency power supplies in two divisions are lost in the conventional emergency core cooling system 52.

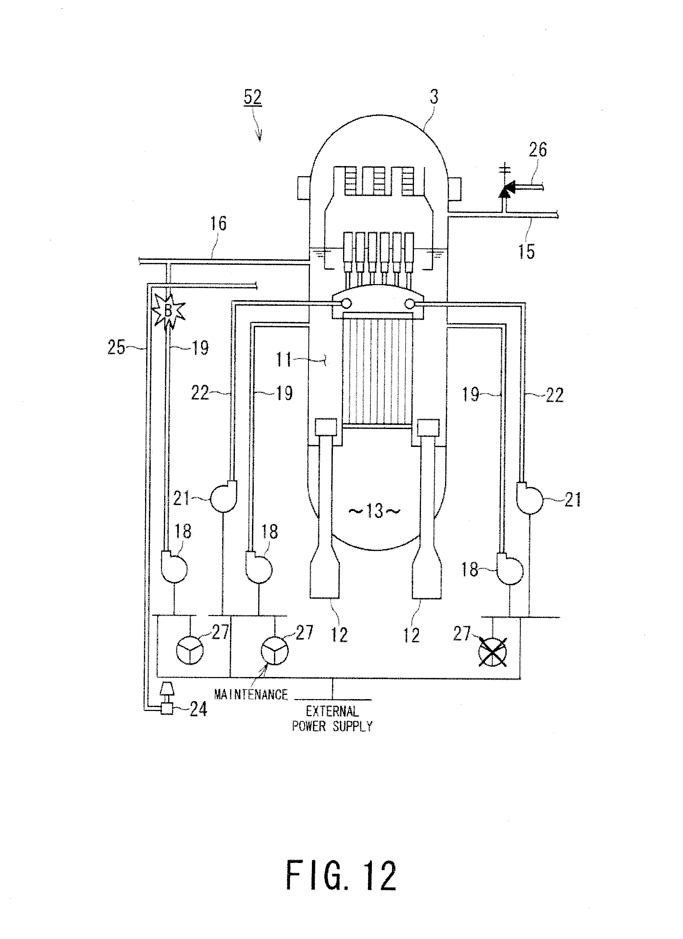

Fig. 12 is a drawing for illustrating an example of the network of the emergency core cooling system in a conventional advanced boiling water reactor.

As shown in Fig. 12 herein, it is assumed that the two divisions, from which the emergency power supplies are lost, have the high-pressure reactor core water injection system 22 for each. In this case, one division including one line of the low-pressure water injection system 19 and one line of the cooling system during isolating the nuclear reactor 25 can be operated. At this time, when assuming that a loss of the nuclear reactor coolant accident occurs as a design basis accident and connection piping of the low-pressure water injection system 19 constituting the operable one division is fractured (character B in Fig. 12), only one line of the cooling system during isolating the nuclear reactor 25 can inject the nuclear reactor coolant into the reactor pressure vessel 3.

However, the cooling system during isolating the nuclear reactor pump 24 provided in the cooling system during isolating the nuclear reactor 25 is turbine-driven, requiring the steam supply in the reactor pressure vessel 3 for driving the pump, so that when the pressure in the reactor pressure vessel 3 is lowered, the nuclear reactor coolant cannot be injected into the reactor pressure vessel 3.

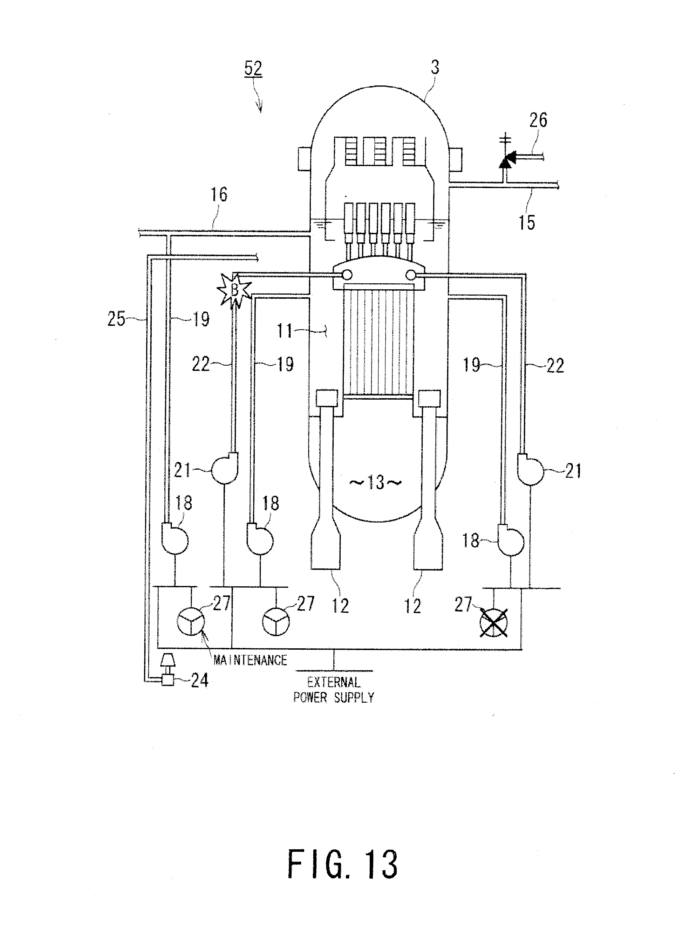

Fig. 13 is a drawing for illustrating an example of the network of the emergency core cooling system in a conventional advanced boiling water reactor.

As shown in Fig. 13, it is assumed that in two divisions, from which the emergency power supplies are lost, one division has the one-line and high-pressure reactor core water injection system 22 and the other division has the one-line and low-pressure water injection system 19 and the one-line cooling system during isolating the nuclear reactor 25. In this case, one division including one line of the low-pressure water injection system 19 and one line of the high-pressure reactor core water injection system 22 can be operated. At this time, when assuming that the loss of the nuclear reactor coolant accident occurs as a design basis accident and connection piping of the high-pressure reactor core water injection system 22 constituting the operable one division is fractured (character B in Fig. 13), only one line of the low-pressure water injection system 19 can inject the nuclear reactor coolant into the reactor pressure vessel 3. Then, the operable one line of the low-pressure water injection system 19 must be used for injecting the nuclear reactor coolant into the reactor pressure vessel 3. Therefore, the continuation of using the low-pressure water injection system 19 using a low-pressure water injection mode, which is one of operation modes of the residual-heat removing system, disables the containment vessel spray cooling system 35 using a containment vessel cooling mode, which is another of the operation modes of the residual-heat removing system, from being used. In this case, means for removing the decay heat inside the reactor containment vessel 2 along a long period of time after the loss of the coolant accident and for decontaminating radioactive materials floating in the ambient atmosphere cannot be used, so that it may be difficult to ensure the soundness of the nuclear reactor containment vessel 2.

### SUMMARY OF THE INVENTION

The present invention was conceived in consideration of the above circumstances encountered in the prior art and an object thereof is to provide a boiling water reactor provided with an emergency core cooling system that is allowed to have multiplicity in an injection system so as to inject nuclear reactor coolant into a reactor pressure vessel even in a case where during on-line maintenance of one line of an emergency power supply, a single failure of another line of the emergency power supply occurs, so that two divisions of emergency core cooling systems out of three divisions thereof cannot be used; and furthermore, in a case where a portion of connection piping provided in the one operable division of the emergency core cooling system is fractured.

It is another object of the present invention to provide a boiling water reactor provided with an emergency core cooling system capable of ensuring the soundness of a reactor containment vessel by removing decay heat in the nuclear reactor containment vessel and decontaminating radioactive materials floating in the ambient atmosphere along a long period of time after a loss of nuclear reactor coolant accident.

Further relevant prior art documents in the field of the present invention are the patent documents JP 4 216494 A, filed 6 August 1992 by Toshiba Corp., JP 2004 061192 A, filed 26 February 2004 by Toshiba Corp., and JP 2006 138680 A, filed 1 June 2006 by Toshiba Corp.

The above and other objects can be achieved according to the present invention by providing, according to claim 1, a boiling water reactor provided with an emergency core cooling system which includes three divisions each comprising a high-pressure core water injection system, a low-pressure water injection system, and an emergency power supply, from which electric power is to be supplied to the high-pressure core water injection system and the low-pressure water injection system for driving a pump.

In the above aspect, it may be desired that at least one of the high-pressure core water injection system and the low-pressure water injection system includes a containment vessel spray.

The containment vessel spray is shared by the high-pressure core water injection system and the low-pressure water injection system in each of three divisions.

The emergency core cooling system further includes a fracture detector for detecting which line in the high-pressure core water injection system and the low-pressure water injection system is fractured.

According to the present invention, an emergency core cooling system is allowed to have multiplicity in an injection system so as to inject coolant into a reactor pressure vessel even in a case where during on-line maintenance of one line of an emergency power supply, a single failure of another line of the emergency power supply occurs, two divisions of emergency core cooling systems out of three divisions cannot be used, and a portion of connection piping provided in one operable division of the emergency core cooling system is fractured.

The nature and further characteristic features of the present invention will be made clearer from the following descriptions made with reference to the accompanying drawings.

### BRIEF DESCRIPTION OF THE DRAWINGS

In the accompanying drawings:
Fig. 1 is a schematic diagram of an advanced boiling water reactor (ABWR) having an emergency core cooling system according to a first example;
Fig. 2 is a drawing for illustrating an example of the emergency core cooling system network in an advanced boiling water reactor having the emergency core cooling system according to the first example;
Fig. 3 is a drawing for illustrating an example of the emergency core cooling system network in the advanced boiling water reactor having the emergency core cooling system according to the first example;
Fig. 4 is a schematic diagram of an advanced boiling water reactor having an emergency core cooling system according to a second example and forming part of the present invention;
Fig. 5 is a schematic diagram of another example of the advanced boiling water reactor having the emergency core cooling system according to the second example;
Fig. 6 is a schematic drawing for illustrating a measuring device of an emergency core cooling system according to a third example and forming part of the present invention;
Fig. 7 is a schematic diagram of an emergency core cooling system in a conventional advanced boiling water reactor;
Fig. 8 is a drawing for illustrating the network of the emergency core cooling system in the conventional advanced boiling water reactor;
Fig. 9 is a drawing for illustrating the network of the emergency core cooling system in the conventional advanced boiling water reactor;
Fig. 10 is a schematic flow sheet of the containment vessel spray cooling system in the conventional advanced boiling water reactor;
Fig. 11 is a drawing showing an example of injection characteristics of nuclear reactor coolant (cooling water) of the emergency core cooling system in the conventional advanced boiling water reactor;
Fig. 12 is a drawing for illustrating an example of the network of the emergency core cooling system in the conventional advanced boiling water reactor; and
Fig. 13 is a drawing for illustrating an example of the network of the emergency core cooling system in the conventional advanced boiling water reactor.

### DESCRIPTION OF THE EXAMPLES

An emergency core cooling will be described hereunder with reference to the attached drawings. Further, it is to be noted that terms "upper", "lower", "right", "left" and the like term are used herein with reference to the illustration of the drawings or in an actually usable state or a nuclear reactor.

### (First Example)

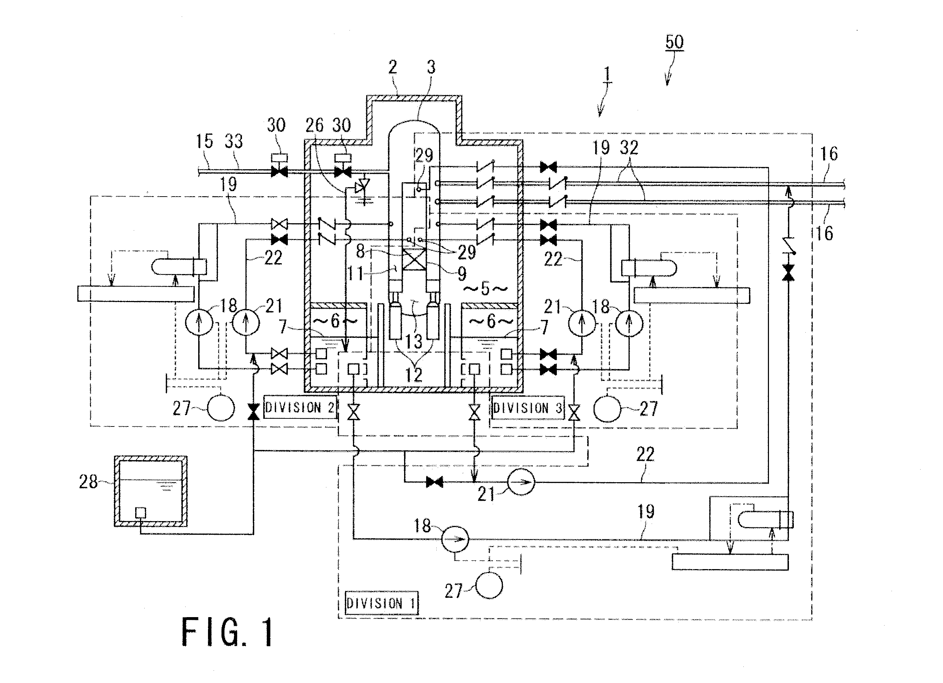

A first example of the emergency core cooling system will be described with reference to Figs. 1 to 3.

As shown in Fig. 1, in an advanced water boiling reactor 50 having the emergency core cooling system 1 according to the example, a reactor pressure vessel 3 is contained within a reactor containment vessel (PCV) 2. The reactor pressure vessel 3 is erected from a support pedestal (not shown). The nuclear reactor containment vessel 2 internally has the support pedestal while including a cylindrical dry well 5 surrounding the reactor pressure vessel 3 and a cylindrical pressure suppression chamber 6 disposed in the circumference of the support pedestal. On the bottom of the pressure suppression chamber 6, a pressure suppression pool 7 is provided for storing nuclear reactor coolant.

Inside the reactor pressure vessel 3, a nuclear reactor core 8 is accommodated, and the nuclear reactor core 8 is covered with a reactor core shroud 9. Between the reactor pressure vessel 3 and the reactor core shroud 9, an annular or sleeve down-corner 11 is formed. Below the down-comer 11, a coolant recirculation pump 12 is provided.

Below the nuclear reactor core 8, a reactor core lower plenum 13 is formed, and core water (the nuclear reactor coolant) lowered through the down-comer 11 by the coolant recirculation pump 12 is led to the reactor core lower plenum 13. The core water led to the reactor core lower plenum 13 is inverted and guided to the nuclear reactor core 8 so as to absorb the heat generated by a fission reaction during passing through the nuclear reactor core 8. Then, it becomes a gas-liquid flow so as to be led to a reactor core upper plenum (not shown).

This gas-liquid flow is subsequently led to a steam separator (not shown) for being gas/liquid separated. The liquid separated is dropped down in the reactor pressure vessel 3 and guided to the down-comer 11.

On the other hand, the steam separated in the steam separator is dried through a steam dryer (not shown) to become dried super-heated steam. The super-heated steam is led to a steam turbine (not shown) through a main steam system 15 so as to rotate the steam turbine for generating electric power by driving a generator (not shown). The main steam system 15 has two lines, but one line is omitted in Fig. 1.

The steam worked in the steam turbine is cooled in a condenser (not shown) so as to become condensate. The condensate subsequently passes through a nuclear reactor condensate / feedwater system 16 so as to be returned to the reactor pressure vessel 3 therefrom, and then, it is mixed with the core water (the nuclear reactor coolant) contained in the reactor pressure vessel 3.

On the other hand, in the advanced boiling water reactor 50, the nuclear reactor core 8 is provided within the reactor pressure vessel 3. In the nuclear reactor core 8, fuel rods (not shown) are loaded.

The emergency core cooling system 1 includes: a three-line and low-pressure water injection system 19 each line having a low-pressure injection system motor-driven pump 18; a three-line and high-pressure reactor core water injection system 22 each line having a high-pressure reactor core injection system motor-driven pump 21; and an automatic pressure reduction system 26.

The emergency core cooling system 1 receives electric power from a three-line emergency diesel generator 27 as an emergency power supply for achieving the safety function of this system even if an external power supply cannot be used in addition to the assumption of a single failure of an instrument constituting the emergency core cooling system 1.

The emergency core cooling system 1, having a three-division configuration, includes: a division 1 having the one-line and low-pressure water injection system 19, the one-line and high-pressure reactor core water injection system 22, and the one-line emergency diesel generator 27; a division 2 having the one-line and low-pressure water injection system 19, the one-line and high-pressure reactor core water injection system 22, and the one-line emergency diesel generator 27; and a division 3 having the one-line and low-pressure water injection system 19, the one-line and high-pressure reactor core water injection system 22, and the one-line emergency diesel generator 27.

The low-pressure injection system pump 18 is provided for pressurizing the nuclear reactor coolant to be injected into the reactor pressure vessel 3.

The low-pressure water injection system 19 uses a low-pressure water injection mode, which is one of operation modes of a residual-heat removing system (not shown). The low-pressure water injection system 19, having independent three lines, absorbs the pool water (the nuclear reactor coolant) in the pressure suppression pool 7 from the pressure suppression chamber 6 so as to inject the pool water outside the reactor core shroud 9 of the reactor pressure vessel 3.

Furthermore, the low-pressure water injection system 19 provided in the division 1 of the emergency core cooling system 1 absorbs the pool water (the nuclear reactor coolant) in the pressure suppression pool 7 from the pressure suppression chamber 6 via feed piping 32 of a nuclear reactor condensate/feedwater system 16 so as to inject the pool water outside the reactor core shroud 9 of the reactor pressure vessel 3.

The low-pressure water injection system 19 is automatically started by a low-signal of the nuclear reactor water level (level 1, for example) or a high-pressure signal of the dry well 5 of the nuclear reactor containment vessel 2, so that when the pressure in the reactor pressure vessel 3 is reduced, the pool water (the nuclear reactor coolant) can be injected into the reactor pressure vessel 3 from the pressure suppression chamber 6.

The high-pressure reactor core injection system pump 21 is provided for pressurizing the nuclear reactor coolant to be injected into the reactor pressure vessel 3.

The independent three lines of the high-pressure reactor core water injection systems 22 absorb the pool water (the nuclear reactor coolant) from a condensate storage tank 28 as a first water source at an early stage and finally from the pressure suppression chamber 6 as a second water source so as to inject the pool water inside the reactor core shroud 9 of the reactor pressure vessel 3.

The high-pressure reactor core water injection system 22 is automatically started by a low-signal of the nuclear reactor water level (level 1.5, for example) or a high-pressure signal of the dry well 5 of the nuclear reactor containment vessel 2, and it is automatically stopped by a high-signal of the nuclear reactor water level (level 8). The pool water is injected onto a fuel assembly through sparger nozzles 29 provided above the nuclear reactor core 8 so as to cool the reactor core 8.

The automatic pressure reduction system 26 reduces the pressure in the reactor pressure vessel 3 by releasing the steam in the reactor pressure vessel 3 to the pressure suppression chamber 6 until a pressure at which the injection can be made by the low-pressure water injection system 19 for cooling the reactor core 8. The automatic pressure reduction system 26 includes some of relief safety valves provided along main steam piping 33 of the main steam system 15.

The automatic pressure reduction system 26 is also operated after a predetermined period of time since both the low-signal of the nuclear reactor water level (level 1, for example) and the high-pressure signal of the dry well 5 of the nuclear reactor containment vessel 2 are received.

The most severe design-basis accidents of the emergency core cooling system 1 in the advanced boiling water reactor are assumed that the internal power supply and the external power supply are lost; a single failure occurs in the emergency diesel generator 27 connected to the one-line and high-pressure reactor core water injection system 22; and a fracture occurs in connection piping of the other one-line and high-pressure reactor core water injection system 22.

The low-pressure water injection system 19 connected to the emergency diesel generator 27 cannot be also used due to the single failure of the emergency diesel generator 27. At this time, the high-pressure reactor core water injection system 22 is started by a low-signal of the nuclear reactor water level (level 1.5, for example) so as to alleviate the lowered nuclear reactor water level by injecting the nuclear reactor coolant into the higher-pressure reactor pressure vessel 3.

Subsequently, the automatic pressure reduction system 26 is started by a low-signal of the nuclear reactor water level (level 1, for example) and the high-pressure signal of the dry well 5 to reduce the pressure in the reactor pressure vessel 3, so that the two lines of the low-pressure water injection systems 19 started by the low-signal of the nuclear reactor water level inject the reactor coolant.

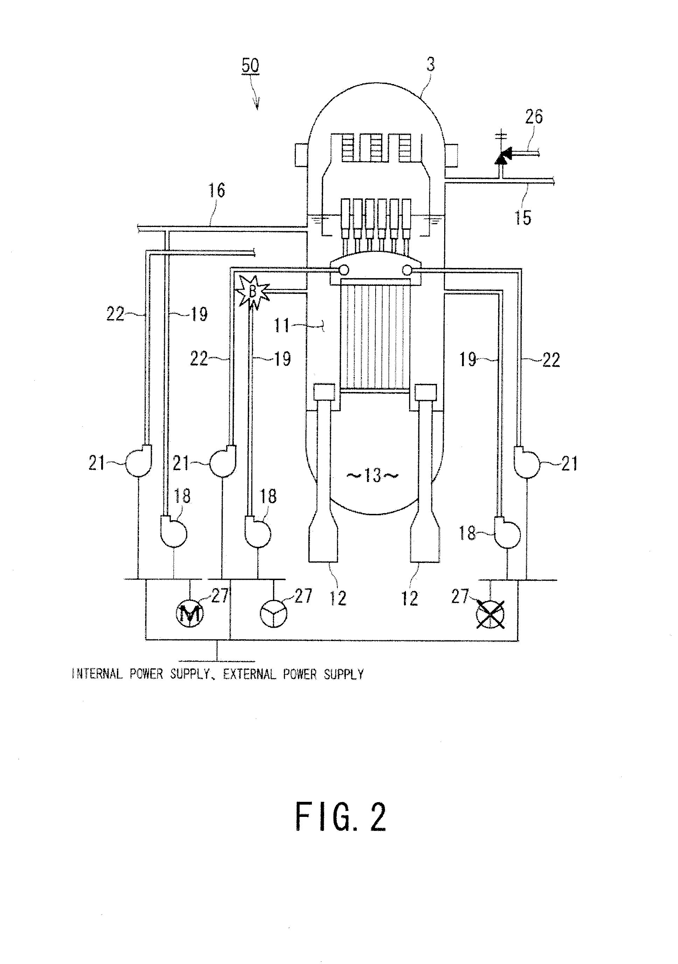

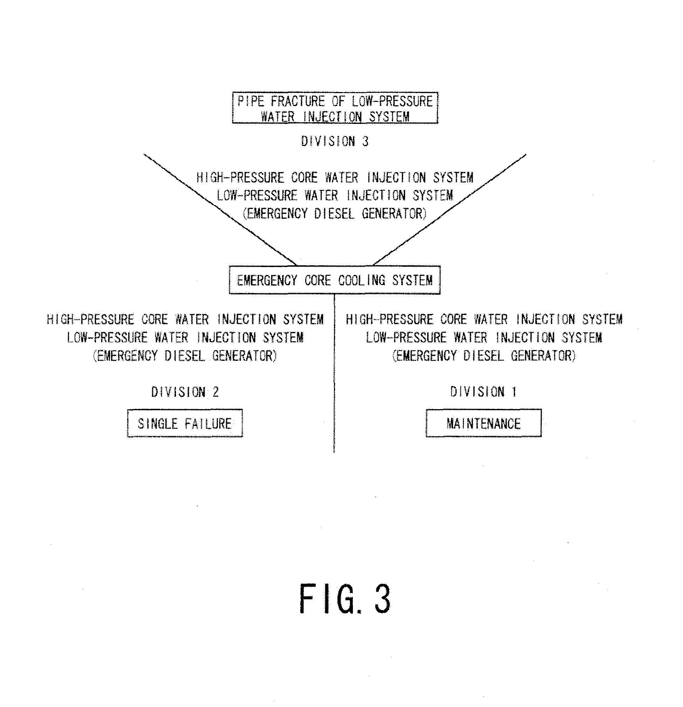

Figs. 2 and 3 are drawings for illustrating an example of the emergency core cooling system network in an advanced boiling water reactor having the emergency core cooling system according to the first example.

As shown in Figs. 2 and 3, for the advanced boiling water reactor 50 having the emergency core cooling system 1, it may be assumed that on-line maintenance of an emergency power supply line having a safety function is executed during ordinary operation of a nuclear power generating plant. For example, during on-line maintenance of one line of the emergency diesel generator 27 (character M in Fig. 2), if a single failure of another line of the emergency diesel generator 27 occurs (symbol "x" in Fig. 2), the total two lines of the emergency diesel generators 27 cannot be used, so that the emergency power supplies in two divisions are lost in the emergency core cooling system 1.

In this case, one division of the emergency core cooling system 1 having the one-line and low-pressure water injection system 19 and the one-line and high-pressure reactor core water injection system 22 can be operated. At this time, when it is assumed that a loss of the nuclear reactor coolant accident is occurred as a design-basis accident and connection piping of the low-pressure water injection system 19 constituting the operable one division of the emergency core cooling system 1 is fractured, only the one-line and high-pressure reactor core water injection system 22 can inject the nuclear reactor coolant into the reactor pressure vessel 3.

Specifically, if it is assumed that during on-line maintenance of the emergency diesel generator 27 provided in the division 1 of the emergency core cooling system 1, a single failure occurs in the emergency diesel generator 27 provided in the division 2, the emergency power supplies of the two divisions are lost in the emergency core cooling system 1. Then, the division 3 of the emergency core cooling system 1 can be operated. At this time, if it is assumed that a loss of the coolant accident occurs as a design-basis accident and connection piping of the low-pressure water injection system 19 constituting the operable division 3 of the emergency core cooling system 1 is fractured, only the one-line and high-pressure reactor core water injection system 22 provided in the division 3 of the emergency core cooling system 1 can inject the nuclear reactor coolant into the reactor pressure vessel 3.

As shown in Fig. 11, the high-pressure reactor core injection system pump 21 provided in the high-pressure reactor core water injection system 22 has characteristics that with decreasing pressure in the reactor pressure vessel 3, the flow rate of the nuclear reactor coolant is increased, which are different from the cooling system during isolating the nuclear reactor 25 provided in the conventional emergency core cooling system 52, which cannot inject the nuclear reactor coolant into the reactor pressure vessel 3 when the pressure in the reactor pressure vessel 3 is lowered. Namely, differently from the cooling system during isolating the nuclear reactor 25 provided in the conventional emergency core cooling system 52, the high-pressure reactor core water injection system 22 of the present invention can inject the nuclear reactor coolant into the reactor pressure vessel 3 even when the pressure in the reactor pressure vessel 3 is lowered, so that the high-pressure reactor core water injection system 22 can function as the low-pressure water injection system 19.

Accordingly, in the emergency core cooling system 1 according to the first example, during on-line maintenance of one line of the emergency diesel generator 27, when a single failure of another line of the emergency diesel generator 27 occurs, so that only one division of the emergency core cooling system 1 can be operated, and even in further assumption of the piping fracture of the low-pressure water injection system 19 provided in the operable one division of the emergency core cooling system 1, the nuclear reactor coolant can be injected into the reactor pressure vessel 3 at a steady flow rate with the high-pressure reactor core water injection system 22 by reducing the pressure of the reactor pressure vessel 3.

If the position of the piping fracture of the low-pressure water injection system 19 provided in the operable one division of the emergency core cooling system 1 does not affect the using the containment vessel cooling mode, which is another operation mode of the residual heat removal system, the containment vessel spray cooling system 35 can be operated by switching the operation mode of the residual heat removal system.

That is, in the advanced boiling water reactor 50 having the emergency core cooling system 1 according to the first example, during on-line maintenance of one line of the emergency power supply, even if a single failure of another line of the emergency power supply occurs, so that two divisions out of three of the emergency core cooling system cannot be used, and even in further assumption of fracture of piping provided in the operable one division of the emergency core cooling system, the injection system is allowed to have multiplicity for injecting nuclear reactor coolant into the reactor pressure vessel.

Along a long period of time after a loss of nuclear reactor coolant accident, the decay heat within the reactor containment vessel 2 can be removed and radioactive materials floating in the ambient atmosphere can be decontaminated so as to ensure the soundness of the nuclear reactor containment vessel.

### (Second Example)

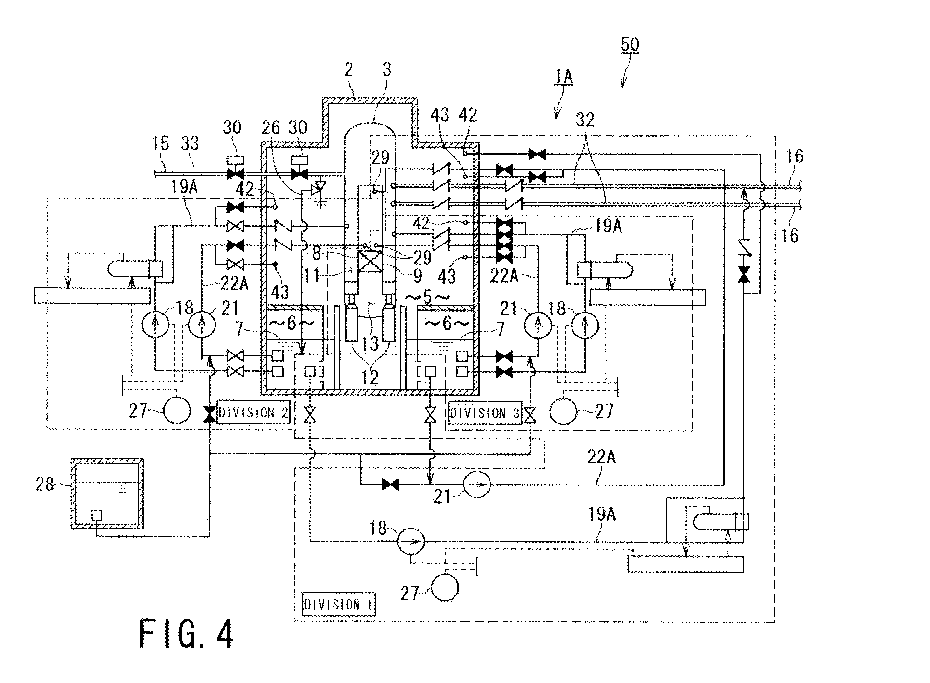

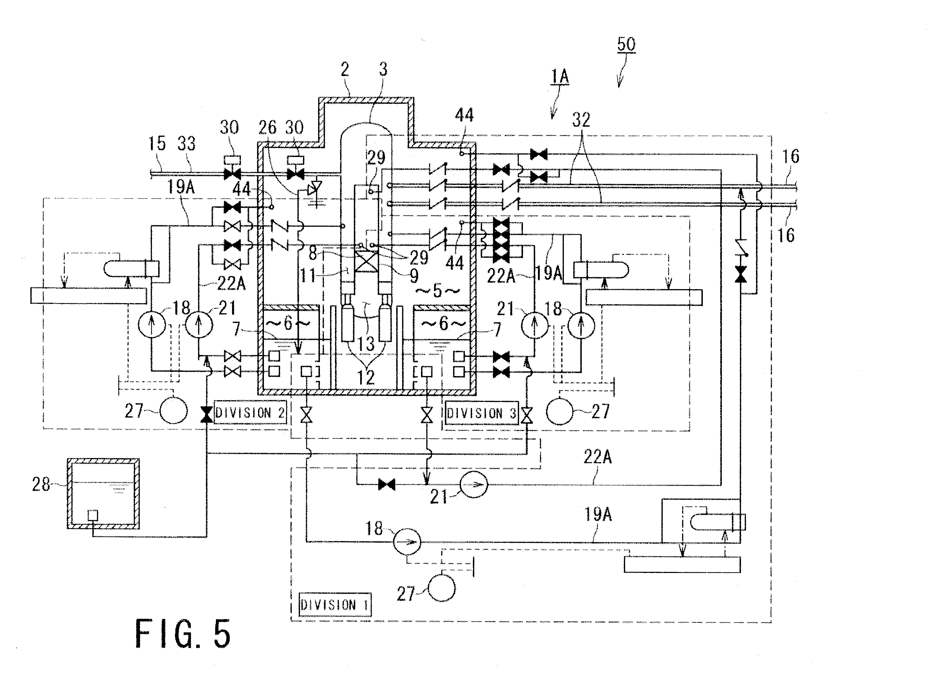

A second example of the emergency core cooling system forming part of the present invention will be described with reference to Figs. 4 and 5.

Fig. 4 is a schematic flow sheet of an advanced boiling water nuclear reactor having an emergency core cooling system according to the second example.

In this emergency core cooling system 1A, like reference characters designate like components common to the emergency core cooling system 1 according to the first example, and the overlapping description is omitted.

As shown in Fig. 4, the emergency core cooling system 1A includes: a three-line and low-pressure water injection system 19A having the low-pressure injection system motor-driven pump 18; a three-line and high-pressure reactor core water injection system 22A having the high-pressure reactor core injection system motor-driven pump 21; and the automatic pressure reduction system 26.

The emergency core cooling system 1A can receive electric power from the three-line emergency diesel generator 27 as an emergency power supply for achieving the safety function of this system even if an external power supply cannot be used in addition to the assumption of single failure of instruments constituting the emergency core cooling system 1A.

The emergency core cooling system 1A, having a three-division configuration, also includes: a division 1 having the one-line and low-pressure water injection system 19A, the one-line and high-pressure reactor core water injection system 22A, and the one-line emergency diesel generator 27; a division 2 having the one-line and low-pressure water injection system 19A, the one-line and high-pressure reactor core water injection system 22A, and the one-line emergency diesel generator 27; and a division 3 having the one-line and low-pressure water injection system 19A, the one-line and high-pressure reactor core water injection system 22A, and the one-line emergency diesel generator 27.

The low-pressure water injection system 19A uses a low-pressure water injection mode, which is one of operation modes of the residual-heat removing system (not shown). The low-pressure water injection system 19A, having independent three lines, also absorbs the pool water (the nuclear reactor coolant) in the pressure suppression pool 7 from the pressure suppression chamber 6 so as to inject the pool water outside the reactor core shroud 9 of the reactor pressure vessel 3. Furthermore, the low-pressure water injection system 19A provided in the division 1 of the emergency core cooling system 1A absorbs the pool water (the nuclear reactor coolant) in the pressure suppression pool 7 from the pressure suppression chamber 6 via the feed piping 32 of the nuclear reactor condensate/feedwater system 16 so as to inject the pool water outside the reactor core shroud 9 of the reactor pressure vessel 3. Furthermore, the low-pressure water injection system 19A also sprays the nuclear reactor coolant upon the dry well 5 in the reactor containment vessel 2 so as to alleviate the pressure by condensing the steam in the dry well 5 while including containment vessel sprays 42 for decontaminating radioactive materials floating in the ambient atmosphere. The connection piping for supplying the nuclear reactor coolant to the containment vessel sprays 42 is forked from the line on the exterior to the nuclear reactor containment vessel 2 for injecting water outside the reactor core shroud 9 of the reactor pressure vessel 3.

The high-pressure reactor core water injection system 22A, having independent three lines, absorbs the pool water (the nuclear reactor coolant) from the condensate storage tank 28 as a first water source at an early stage and finally from the pressure suppressing chamber 6 as a second water source so as to inject the pool water inside the reactor core shroud 9 of the reactor pressure vessel 3.

The high-pressure reactor core water injection system 22A also sprays the nuclear reactor coolant upon the dry well 5 in the nuclear reactor containment vessel 2 so as to alleviate the pressure by condensing the steam in the dry well 5 while including containment vessel sprays 43 for decontaminating radioactive materials floating in the ambient atmosphere. The connection piping for supplying the nuclear reactor coolant to the containment vessel sprays 43 is forked from the line on the exterior to the nuclear reactor containment vessel 2 for injecting water inside the reactor core shroud 9 of the reactor pressure vessel 3.

Fig. 5 is a schematic flow sheet of another example of the advanced boiling water reactor having the emergency core cooling system according to the second example.

As shown in Fig. 5, the low-pressure water injection system 19A and the high-pressure reactor core water injection system 22A, which are provided in the emergency core cooling system 1A, share containment vessel sprays 44. The low-pressure water injection systems 19A and the high-pressure reactor core water injection systems 22A of three divisions provided in the emergency core cooling system 1A may also share one-line containment vessel sprays (not shown).

Accordingly, lines of connection piping in the emergency core cooling system 1A can be simplified. The installation space for the containment vessel sprays 44 can be reduced, so that the installation space for the feed piping 32 of the nuclear reactor condensate/feedwater system 16 and the main steam piping 33 of the main steam system 15, which are provided within the nuclear reactor containment vessel 2, cannot be invaded therewith as well as the work space can be improved for working in the nuclear reactor containment vessel 2, such as a periodical inspection.

In the emergency core cooling system 1A according to this second example, it is assumed that during on-line maintenance of the emergency diesel generator 27 provided in one division, a single failure is occurred in the emergency diesel generator 27 provided in another division, so that only one division of the emergency core cooling system 1A can be operated. At this time, a fracture of piping of the high-pressure reactor core water injection system 22A of the operable division of the emergency core cooling system 1A for injecting water inside the reactor core shroud 9 of the reactor pressure vessel 3 in the inside of the nuclear reactor containment vessel 2, may be further assumed.

According to the emergency core cooling system 1A of this example, by switching the operation mode of the high-pressure reactor core water injection system 22A provided in the operable one division of the emergency core cooling system 1A, with the containment vessel sprays 43 connected to a line other than the fractured line, the nuclear reactor coolant can be sprayed on the dry well 5 within the nuclear reactor containment vessel 2 so as to alleviate the pressure by condensing the steam in the dry well while radioactive materials floating in the ambient atmosphere can be decontaminated. The low-pressure water injection system 19A provided in the operable one division of the emergency core cooling system 1A can continue to inject the nuclear reactor coolant into the reactor pressure vessel 3.

Namely, in the advanced boiling water reactor 50 having the emergency core cooling system 1A according to the example, the injection system can be allowed to have multiplicity so as to inject the nuclear reactor coolant into the reactor pressure vessel even in a case where during on-line maintenance of one line of an emergency power supply, a single failure of another line of the emergency power supply occurs, so that two divisions of emergency core cooling systems out of three divisions thereof cannot be used. Furthermore, even when a portion of connection piping provided in the one operable division of the emergency core cooling system is fractured, a multiple performance is endowed to the supply system so as to supply coolant into the reactor pressure vessel.

Along a long period of time after a loss of nuclear reactor coolant accident, the decay heat in the nuclear reactor containment vessel 2 can be removed and radioactive materials floating in the ambient atmosphere can be decontaminated so as to ensure the soundness of the nuclear reactor containment vessel.

### (Third Example)

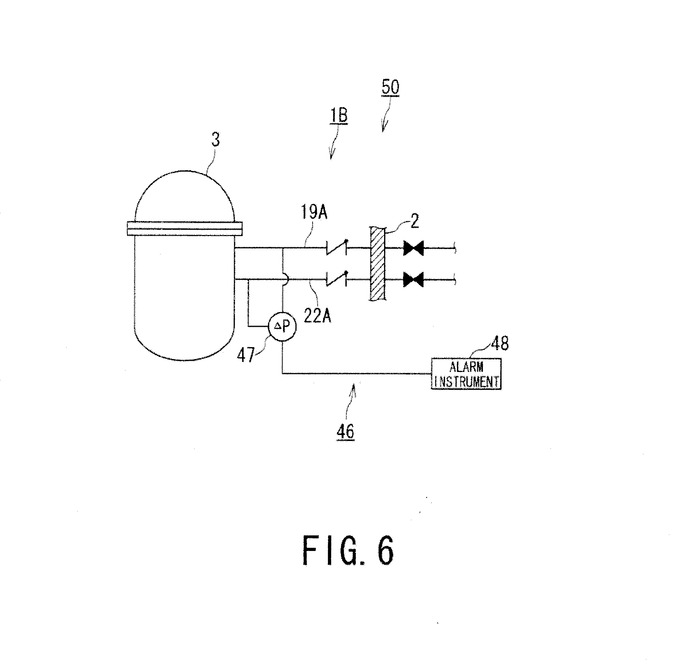

A third example of the emergency core cooling system forming part of the present invention will be described with reference to Fig. 6.

Fig. 6 is a drawing for illustrating a measuring device of the emergency core cooling system according to the third example.

In this emergency core cooling system 1B, like reference characters designate like components common to the emergency core cooling system 1 according to the first example, and the overlapping description is omitted.

As shown in Fig. 6, the emergency core cooling system 1B includes fracture detectors 46 for detecting which line is fractured in connection lines between the low-pressure water injection systems 19 and the high-pressure reactor core water injection systems 22, which are provided in three divisions of the emergency core cooling system 1B in the nuclear reactor containment vessel 2. The emergency core cooling system 1B has the three divisions, with two divisions omitted in Fig. 6.

The fracture detector 46 includes a differential pressure gauge 47 for measuring the differential pressure in connection lines between the low-pressure water injection system 19 and the high-pressure reactor core water injection system 22 within the nuclear reactor containment vessel 2, and an alarm instrument 48 for alarming when the differential pressure of the differential pressure gauge 47 reaches a predetermined value. The differential pressure gauge 47 may also independently include a differential pressure gauge for measuring the differential pressure between the low-pressure water injection system 19 and the reactor pressure vessel 3 and a differential pressure gauge for measuring the differential pressure between the high-pressure reactor core water injection system 22 and the reactor pressure vessel 3.

In the emergency core cooling system 1B according to this third example, it is assumed that during on-line maintenance of the emergency diesel generator 27 provided in one division of the emergency core cooling system 1B, a single failure is occurred in the emergency diesel generator 27 provided in another division of the emergency core cooling system 1B, so that only one division of the emergency core cooling system 1B can be operated. At this time, a fracture of piping of the low-pressure water injection system 19 provided in the operable one division of the emergency core cooling system 1B for injecting water in the reactor core shroud 9 of the reactor pressure vessel 3 in the inside of the nuclear reactor containment vessel 2, may be further assumed.

According to the emergency core cooling system 1B of this third example, which line being fractured can be detected in the low-pressure water injection systems 19 and the high-pressure reactor core water injection systems 22, which are provided in the operable one division of the emergency core cooling system 1B. Then, while the injection of the nuclear reactor coolant into the reactor pressure vessel 3 is being continued by the high-pressure reactor core water injection system 22 provided in the operable one division of the emergency core cooling system 1B, by switching the operation mode of the low-pressure water injection system 19, with the containment vessel sprays 43 connected to a line other than the fractured line, the nuclear reactor coolant is sprayed on the dry well 5 within the nuclear reactor containment vessel 2 so as to alleviate the pressure by condensing the steam in the dry well while radioactive materials floating in the ambient atmosphere can be decontaminated.

Namely, in the advanced boiling water reactor 50 having the emergency core cooling system 1B according to the example, the injection system can be allowed to have multiplicity so as to inject the nuclear reactor coolant into the reactor pressure vessel even in a case where during on-line maintenance of one line of an emergency power supply, a single failure of another line of the emergency power supply occurs, so that two divisions of emergency core cooling systems out of three divisions thereof cannot be used. Furthermore, even when a portion of connection piping provided in the one operable division of the emergency core cooling system is fractured, a multiple performance is endowed to the supply system so as to supply coolant into the reactor pressure vessel.

Along a long period of time after a loss of nuclear reactor coolant accident, the decay heat in the nuclear reactor containment vessel 2 can be removed and radioactive materials floating in the ambient atmosphere can be decontaminated so as to ensure the soundness of the nuclear reactor containment vessel.

## Claims

1. A boiling water reactor (50) provided with an emergency core cooling system (1, 1A, 1B) including three divisions (1, 2, 3) each comprising a high-pressure core water injection system (22), a low-pressure water injection system (19), and an emergency power supply (27), from which electric power is to be supplied to the high-pressure core water injection system (22) and the low-pressure water injection system (19) for driving a pump (18, 21), the emergency core cooling system (1, 1A, 1 B) further including a containment vessel spray (42, 43, 44) shared by the high-pressure core water injection system (22) and the low-pressure water injection system (19) in each of three divisions (1, 2, 3), and a fracture detector (46) for detecting which line is fractured in connection lines between the low pressure water injection system (19) and the high pressure water core injection system (22), so that when a fracture occurs in either one of the high-pressure core water injection system (22) and the low-pressure water injection system (19), another one of the high-pressure core water injection system (22) and the low-pressure water injection system (19) performs spraying of water by the containment vessel spray (42, 43, 44).

## Patentansprüche

1. Siedewasserreaktor (50), der mit einem Notkernkühlsystem (1, 1A, 1B) versehen ist, das drei Abteilungen (1, 2, 3) aufweist, die jeweils ein Hochdruckkernwassereinspritzsystem (22), ein Niederdruckwassereinspritzsystem (19) und eine Notenergieversorgung (27) umfassen, von der das Hochdruckkernwassereinspritzsystem (22) und das Niederdruckwassereinspritzsystem (19) zum Antreiben einer Pumpe (18, 21) mit elektrischer Energie versorgt werden, wobei das Notkernkühlsystem (1, 1A, 1B) ferner eine Sicherheitsbehältersprühvorrichtung (42, 43, 44), die von dem Hochdruckkernwassereinspritzsystem (22) und dem Niederdruckwassereinspritzsystem (19) in jeder von drei Abteilungen (1, 2, 3) geteilt wird, und eine Risserfassungsvorrichtung (46) aufweist, um zu erfassen, welche Leitung in Verbindungsleitungen zwischen dem Niederdruckwassereinspritzsystem (19) und dem Hochdruckkernwassereinspritzsystem (22) gerissen ist, so dass, wenn ein Riss im Hochdruckkernwassereinspritzsystem (22) oder im Niederdruckwassereinspritzsystem (19) auftritt, das jeweils andere des Hochdruckkernwassereinspritzsystems (22) und des Niederdruckwassereinspritzsystems (19) das Sprühen von Wasser durch die Sicherheitsbehältersprühvorrichtung (42, 43, 44) durchführt.

## Revendications

1. Réacteur à eau bouillante (50) pourvu d'un système de refroidissement d'urgence du coeur (1, 1A, 1B) comportant trois divisions (1, 2, 3), chacune comprenant un système d'injection d'eau haute pression dans le coeur (22), un système d'injection d'eau basse pression (19) et une alimentation électrique de secours (27), depuis laquelle la puissance électrique doit être fournie au système d'injection d'eau haute pression dans le coeur (22) et au système d'injection d'eau basse pression (19) pour entraîner une pompe (18, 21), le système de refroidissement d'urgence du coeur (1, 1A, 1B) comportant en outre un dispositif de pulvérisation dans l'enceinte de confinement (42, 43, 44) partagé par le système d'injection d'eau haute pression dans le coeur (22) et le système d'injection d'eau basse pression (19) dans chacune de trois divisions (1, 2, 3), et un détecteur de fracture (46) pour détecter quelle ligne est fracturée dans les lignes de connexion entre le système d'injection d'eau basse pression (19) et le système d'injection d'eau haute pression dans le coeur (22), de sorte que lorsqu'une fracture se produit dans l'un ou l'autre du système d'injection d'eau haute pression dans le coeur (22) et du système d'injection de basse pression (19), un autre du système d'injection d'eau haute pression dans le coeur (22) et du système d'injection de basse pression (19) effectue la pulvérisation d'eau par le dispositif de pulvérisation dans l'enceinte de confinement (42, 43, 44).
